(19) Europäisches Patentamt
European Patent Office
Office européen des brevets

(11) **EP 3 183 435 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **15775436.7**

(22) Anmeldetag: **05.10.2015**

(51) Int Cl.:
***F01K 13/02*** *(2006.01)*

(86) Internationale Anmeldenummer:
**PCT/EP2015/072925**

(87) Internationale Veröffentlichungsnummer:
**WO 2016/062533 (28.04.2016 Gazette 2016/17)**

(54) **VERFAHREN UND STEUEREINRICHTUNG ZUM SYNCHRONSIEREN EINER TURBINE MIT DEM STROMNETZ**

METHOD FOR SYNCHRONISING A TURBINE WITH THE POWER NETWORK

PROCÉDÉ DE SYNCHRONISATION D'UNE TURBINE AU RÉSEAU ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2014 EP 14190269**

(43) Veröffentlichungstag der Anmeldung:
**28.06.2017 Patentblatt 2017/26**

(73) Patentinhaber: **Siemens Aktiengesellschaft**
**80333 München (DE)**

(72) Erfinder:
• **HEUE, Matthias**
**44879 Bochum (DE)**
• **ZIMMER, Gerta**
**45468 Mülheim an der Ruhr (DE)**

(56) Entgegenhaltungen:
**EP-A1- 1 764 486      EP-A1- 2 642 084**
**US-A- 4 280 060      US-A1- 2008 174 122**

**Beschreibung**

Die Erfindung betrifft ein Verfahren zur Synchronisierung einer Turbine mit einem Stromnetz und eine zugehörige Steuereinrichtung.

Bei der Stromerzeugung in Kraftwerken, in denen der erzeugte Strom in ein Stromnetz eingespeist wird, ist darauf zu achten, dass der Strom phasenrichtig eingespeist wird. In thermischen Kraftanlagen, in denen der Strom in von Turbinen angetriebenen Generatoren erzeugt wird, ist also die Turbine in eine zur Phase des Stromnetzes passende Winkellage zu bringen, damit der Strom eingespeist werden kann. Genau genommen kommt es selbstverständlich auf die Winkellage des Generatorrotors an. Da der Rotor des Generators im Regelfall fest mit dem Rotor der Turbine verbunden ist, wird vorliegend stets davon gesprochen, dass die Turbine synchronisiert werden muss, wenngleich es eigentlich um den Generator geht.

Im Stand der Technik ist es üblich die Turbine unabhängig von der Phasenlage des Stromnetzes auf Netzfrequenz zu bringen. Sodann wird die Turbine mit Hilfe eines sogenannten Synchronisiergeräts in die richtige Phasenlage gebracht. Dazu wird die Turbine solange leicht beschleunigt oder abgebremst, salopp kann man von einen Hin- und Herfahren sprechen, bis die Phasenlage passend ist.

Das Dokument US 4 280 060 offenbart ein Regelungssystem für eine Dampfturbine und einen Generator umfassend mehrere Microcomputer-Subsysteme.

Die EP 2 642 084 offenbart eine Ventilanordnung zur Regelung der Dampfversorgung für eine Dampfturbine.

Die US 2008/0174122 zeigt ein Energieerzeugungsgerät.

In der EP 1 764 486 wird ein Verfahren zum Ermitteln der aktuellen Maximalleistung einer Kraftwerksanlage offenbart.

Aufgabe der vorliegenden Erfindung ist es ein Verfahren zur verbesserten Synchronisierung einer Turbine mit einem Wechselstromnetz zu schaffen. Die Lösung dieser Aufgabe findet sich insbesondere in den unabhängigen Ansprüchen. Die Unteransprüche geben Ausführungsformen an. Weitere Einzelheiten sind der Beschreibung zu entnehmen.

Es wurde erkannt, dass ein Verfahren zur Synchronisierung einer Turbine mit einem Wechselstromnetz mit einer Netzfrequenz bereitzustellen ist, welches die folgenden Schritte aufweist.

In einem Schritt A) ist die Turbine bis zu einer Frequenz im Bereich der Netzfrequenz zu beschleunigen. Unter einer Frequenz im Bereich der Netzfrequenz ist im Allgemeinen eine Frequenz in einem Intervall von etwa 1 Hertz unterhalb der Netzfrequenz bis zu etwa 1 Hertz oberhalb der Netzfrequenz. Exakte Werte sind nicht sinnvoll. Entscheidend ist, dass der Unterschied zwischen Netzfrequenz und Turbinenfrequenz nicht mehr besonders hoch ist.

Als Schritt B) ist das Erfassen eines Differenzwinkels zwischen Turbine und Wechselstromnetz vorgesehen.

Als Schritt C) ist das Erfassen einer Differenzgeschwindigkeit zwischen Turbine und Wechselstromnetz vorgesehen. Anders ausgedrückt wird die Differenz zwischen der Turbinenfrequenz und der Netzfrequenz ermittelt.

Die Netzfrequenz könnte theoretisch als bekannt angenommen werden. Wegen Frequenzschwankungen ist es jedoch sinnvoll auch die Netzfrequenz zu erfassen. Selbiges gilt verständlicherweise noch mehr für die Phasenlage des Netzes.

Es versteht sich, dass der Schritt C) oft während Schritt A) durchzuführen ist, um zu wissen wann die Turbinenfrequenz den Bereich der Netzfrequenz erreicht hat. Da die Netzfrequenz, abgesehen von geringen Schwankungen, die bei Schritt A noch nicht bedeutsam sind, konstant ist, könnte bei Schritt A) noch auf die Erfassung der Differenzgeschwindigkeit verzichtet werden und bis in den Bereich der bekannten Netzfrequenz, in Deutschland beispielweise 50 Hertz, beschleunigt werden.

Für die Erfindung entscheidend ist der Schritt D), nämlich das Beschleunigen oder Verzögern der Turbine derart, dass die Turbine einer Solltrajektorie folgt. Die Solltrajektorie ist dabei eine vorab errechnete Trajektorie, die in Abhängigkeit vom Differenzwinkel eine Solldifferenzgeschwindigkeit angibt, die vorhanden sein soll, damit bei übereinstimmender Geschwindigkeit von Turbine und Wechselstromnetz eine für eine synchrone Einspeisung geeignete Zielwinkellage zwischen Turbine und Wechselstromnetz erreicht wird.

Bei der Solltrajektorie handelt es sich um eine mathematische Funktion, die angibt welchen Wert die Solldifferenzgeschwindigkeit in Abhängigkeit vom Differenzwinkel haben soll, damit bei übereinstimmender Geschwindigkeit von Turbine und Wechselstromnetz die für eine synchrone Einspeisung geeignete Zielwinkellage erreicht wird. Die Solltrajektorie hängt dabei ersichtlich von einer angestrebten Beschleunigung oder Verzögerung ab. Es versteht sich, dass beim Ausregeln auf die Solltrajektorie keine unnötigen mechanischen Belastungen, etwa durch zu starkes Abbremsen erfolgen sollen. Dabei ist es nicht erforderlich die Solltrajektorie für die jeweilige Anwendung jeweils neu auszuwählen.

Dadurch, dass die Turbine der Solltrajektorie folgt kann am Ende des Beschleunigens oder Verzögerns, das heißt bei Übereinstimmung von Turbinenfrequenz und Netzfrequenz sofort mit der Stromeinspeisung begonnen werden, da die erwünschte Winkellage erreicht ist. Auf diese Weise lässt sich die Zeit bis zum Beginn der Stromerzeugung reduzieren. Damit kann ein höherer wirtschaftlicher Ertrag erzielt werden. Ein besonders wichtiger Gesichtspunkt dabei ist, dass der Strom nach der Entscheidung das Kraftwerk anzufahren, mitunter zeitnah benötigt wird. In einem solchen Fall kann es für die Stabilität des Stromnetzes von entscheidender Bedeutung sein, dass schnell mit der Stromerzeugung begonnen wird. Dabei können wenige Minuten von hoher wirtschaftlicher Bedeutung sein. Im Stand der Technik werden, nachdem die Turbinenfrequenz in etwa der Netzfrequenz entspricht, für das Erreichen der richtigen Phasenlage noch zwei bis drei Minuten benötigt. Mit der vorliegenden Erfindung kann diese Zeit deutlich, mitunter auf wenige Sekunden, reduziert werden.

Da die Differenzgeschwindigkeit und der Differenzwinkel erfasst werden, werden mögliche Schwankungen der Netzfrequenz mit erfasst und berücksichtigt. Die Synchronisierung erfolgt also auch dann zuverlässig, wenn Schwankungen der Netzfrequenz auftreten.

In einer Ausführungsform der Erfindung ist vorgesehen, dass zum Beschleunigen oder Verzögern der Turbine derart, dass die Turbine einer Solltrajektorie folgt, folgende Schritte wiederholt vorgenommen werden:
Als Schritt E) ist die Ermittlung einer sich aus der Solltrajektorie bei einem erfassten Differenzwinkel ergebenden Solldifferenzgeschwindigkeit vorgesehen.

Im Schritt F) erfolgt ein Vergleich der Solldifferenzgeschwindigkeit mit der bei dem erfassten Differenzwinkel erfassten Differenzgeschwindigkeit.

Im Schritt G) erfolgt ein Beschleunigen oder Verzögern der Turbine derart, dass die Solldifferenzgeschwindigkeit zumindest näherungsweise erreicht wird.

Zur Klarstellung sei erwähnt, dass unter der "Differenzgeschwindigkeit" die messtechnisch erfasste Differenzgeschwindigkeit, also die messtechnisch erfasste Frequenzdifferenz zwischen Turbine und Netz ist. Demgegenüber ist die Solldifferenzgeschwindigkeit aus der Solltrajektorie abgelesen. Stets kann anstelle von der Differenzgeschwindigkeit auch von der Frequenzdifferenz gesprochen werden.

Man betrachte die Situation, in der die Turbine schneller ist als das Netz, also die Turbinenfrequenz höher ist als die Netzfrequenz und die Turbine verzögert werden muss. Dann gilt es bei einer Solldifferenzgeschwindigkeit oberhalb der messtechnisch erfassten Differenzgeschwindigkeit die Verzögerung der Turbine zu senken und bei einer Solldifferenzgeschwindigkeit unterhalb der Differenzgeschwindigkeit die Verzögerung der Turbine zu erhöhen.

Sofern die Turbinenfrequenz niedriger ist als die Netzfrequenz, gilt es bei einer Solldifferenzgeschwindigkeit oberhalb der Differenzgeschwindigkeit die Turbine schwächer zu beschleunigen und entsprechend bei einer Solldifferenzgeschwindigkeit unterhalb der Differenzgeschwindigkeit stärker zu beschleunigen.

Es ist auch denkbar, dass auch bei einer Turbinenfrequenz oberhalb der Netzfrequenz kurzzeitig die Turbine beschleunigt und bei einer Turbinenfrequenz unterhalb der Netzfrequenz kurzzeitig die Turbine verzögert wird, um der Solltrajektorie zu folgen. Im Regelfall wird dies jedoch nicht geschehen.

In einer wichtigen Ausführungsform werden die Schritte E), also Ermittlung einer sich aus der Solltrajektorie bei einem erfassten Differenzwinkel ergebenden Solldifferenzgeschwindigkeit, und der Schritt F), also Vergleich der Solldifferenzgeschwindigkeit mit der bei dem erfassten Differenzwinkel erfassten Differenzgeschwindigkeit kontinuierlich durchgeführt. Damit kann die nach Schritt G) erforderliche Beschleunigung oder Verzögerung kontinuierlich angepasst werden.

Man kann das Folgen der Solltrajektorie auch als einen Regelkreis ansehen, bei dem die Differenzgeschwindigkeit die Regelgröße ist und die Solldifferenzgeschwindigkeit die Führungsgröße ist.

In einer Ausführungsform ist die Solltrajektorie parabelförmig. Die Solltrajektorie wird also so gewählt, dass die ideal folgende Verzögerungsfunktion die Form einer Parabel hat. Das entspricht dann einem Verzögern mit linear abnehmender Verzögerung, beim Erreichen der richtigen Phasenlage ist die Verzögerung der Turbine gleich Null.

Dies hat sich als brauchbar erwiesen. Es wird hier von Verzögerungsfunktion und Verzögerung gesprochen; dabei wird angenommen, dass die Turbine zunächst bis zu einer Frequenz oberhalb der Netzfrequenz beschleunigt worden ist. Anderenfalls müsste von einer Beschleunigungsfunktion und von Beschleunigung gesprochen werden.

In einer Ausführungsform wird die Turbine zunächst bis zu einer Frequenz oberhalb der Netzfrequenz beschleunigt. Dieses Vorgehen hat sich in der Praxis bewährt. Dann gilt es wie bereits erwähnt die Turbine ausgehend von dieser Frequenz oberhalb der Netzfrequenz bis zur Netzfrequenz zu verzögern. Dabei ist zu beachten, dass es im Normalfall nicht gelingt, die Turbine genau bis zu einer Frequenz zu beschleunigen. Die Turbine wird zunächst noch weiter beschleunigen, es wird auch von überschwingen oder überschießen gesprochen. Erst nach diesem Überschwingen ist es sinnvoll die Turbine gemäß der Solltrajektorie abzubremsen. Soweit die Solltrajektorie ein Abbremsen vorsieht, kann auch von einer Sollabbremsfunktion gesprochen werden.

Im Interesse einer zügigen Synchronisierung ist eine Frequenz von etwa 0,25 Hz oberhalb der Netzfrequenz sehr geeignet. Damit ist einerseits die während des Abbremsens zu erreichende Geschwindigkeitsreduktion überschaubar. Andererseits ist eine hinreichende Differenz zwischen der Turbinenfrequenz und der Netzfrequenz gegeben.

In einer Ausführungsform wird berücksichtigt, dass bei einem mehrphasigen Netz mehrere Zielwinkellagen vorhanden sein können, wobei bevorzugt diejenige Zielwinkellage ausgewählt wird, die von dem Differenzwinkel, der bei Beginn der Ausregelung auf die Solltrajektorie vorliegt, am schnellsten erreicht wird. Dies dürfte im Allgemeinen die Zielwinkellage sein, bei der die Turbine am wenigsten relativ zum Netz verdreht werden muss.

Beim etwa in Deutschland vorhandenen Netz sind drei Phasen mit einer Phasendifferenz von 120° vorhanden. Entsprechend weist auch der Generator eine entsprechende Struktur auf, so dass eine Drehung um 120° wieder zu einer hinsichtlich der Phasenlage identischen Stellung führt. Insofern ist stets eine Mehrzahl von Zielwinkellagen möglich. Die erforderliche Verdrehung der Turbine relativ zur Phasenlage des Netzes beträgt beim oben geschilderten Fall mithin immer weniger als 120°.

In einer Ausführungsform benötigt das Beschleunigen oder Verzögern der Turbine, derart dass die Turbine der Solltrajektorie folgt, bis zum Erreichen der Zielwinkellage etwa 20 s. Damit kann ohne überzogene mechanische Belastung die Turbine in überschaubarer Zeit auf Netzfrequenz abgebremst oder beschleunigt werden.

Bei der oben beispielhaft genannten Sollhaltefrequenz von 0,25 Hz oberhalb der Netzfrequenz sind etwa 10 Sekunden anzusetzen, bis der Überschwinger aus der Beschleunigung abgeklungen ist. Zusammen mit der beispielhaften Zeit von 20 Sekunden zum Abbremsen der Turbine kann damit innerhalb von etwa 30 Sekunden mit der Stromerzeugung begonnen werden. Im Vergleich zu den im Stand der Technik üblichen 2 bis 3 Minuten ist dies eine deutliche Verbesserung.

Die Erfindung betrifft ebenfalls eine Steuereinrichtung für eine Turbine, die eingerichtet ist, eine Turbine nach dem oben geschilderten Verfahren zu steuern.

Anhand der Zeichnungen werden nachfolgend weitere Einzelheiten der Erfindung dargestellt.

Dabei zeigen

Figur 1    eine Darstellung der Turbinenfrequenz, der Netzfrequenz und der Solltrajektorie;

Figur 2    die Solltrajektorie, also den Sollverlauf der Differenz zwischen Netz- und Turbinenfrequenz beim Abbremsen abhängig von dem Differenzwinkel zwischen Turbine und Netz.

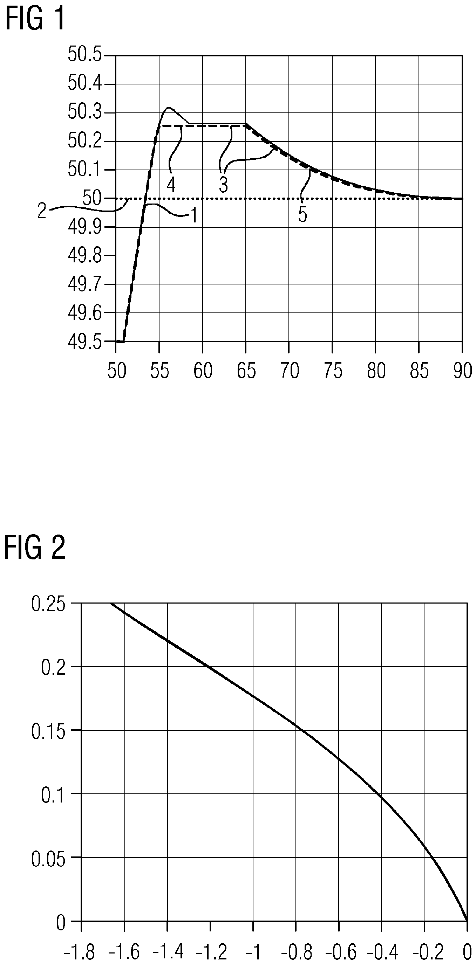

In Figur 1 wird exemplarisch der Zusammenhang zwischen Turbinenfrequenz 1, Netzfrequenz 2 und einer Sollfrequenz 3 dargestellt. Auf der Hochwertachse ist die Frequenz in Hertz aufgetragen, auf der Rechtswertachse die Zeit in Sekunden. Die als gepunktete Linie gezeigte Netzfrequenz 2 liegt bei 50 Hertz. Schwankungen der Netzfrequenz 2, die auftreten können, sollen hier außer Acht gelassen werden. Die durchgezogene Linie zeigt die Turbinenfrequenz 1. Die gestrichelte Linie zeigt den Verlauf der Sollfrequenz 3 für die Turbine. Wie am Verlauf der Turbinenfrequenz 1 ersichtlich, erfolgt beim Beschleunigen der Turbine auf 50,25 Hertz zunächst eine Beschleunigung über diesen Wert hinaus, also ein sogenanntes Überschwingen. Bevor mit einem geregelten Abbremsen der Turbine auf Netzfrequenz begonnen wird, soll das Überschwingen zunächst abgewartet werden.

Um dies anzuzeigen verläuft die Sollfrequenz 3 im Zeitraum beginnend bei 55 Sekunden und endend bei 75 Sekunden bei einer Frequenz von 50,25 Hertz als gerade Strecke 4.

Anschließend soll ein parabelförmiges Abbremsen erfolgen. Die Sollfrequenz 3 verläuft weiter als Solltrajektorie 5, welche als Sollabbremsfunktion ausgebildet ist. Die Sollfrequenz 3 setzt sich mithin aus der geraden Strecke 4 und der folgenden Sollabbremsfunktion 5 zusammen.

Bei der Sollabbremsfunktion 5 handelt es sich wie bereits dargestellt um einen mathematischen Zusammenhang, der angibt welche Differenzgeschwindigkeit zwischen Turbine und Netz, also welche Frequenzdifferenz zwischen Turbine und Netz, gegeben sein muss, damit bei übereinstimmender Frequenz von Turbine und Netz eine gewünschte Zielwinkellage erreicht wird.

Die Zielwinkellage ist diejenige Winkellage, die für die Synchronisierung erforderlich ist. Die Turbine muss die Netzfrequenz also bei diesem Winkel erreichen. Die Sollabbremsfunktion hat dabei die Aufgabe einen Zusammenhang zwischen Solldifferenz zwischen Netz- und Turbinenfrequenz und dem Differenzwinkel zwischen Turbine und Netz herzustellen. Zu beachten ist, dass bei einem dreiphasigen Netz, bei dem die einzelnen Phasen um 120° verschoben sind, drei um 120° versetzte Winkellagen für die Synchronisierung in Frage kommen. Als Zielwinkellage ist derjenige Winkel auszuwählen, die von dem Differenzwinkel, der bei Beginn der Ausregelung auf die Sollabbremsfunktion 5 vorliegt, am schnellsten erreicht wird.

In Figur 2 findet sich eine Darstellung der Sollabbremsfunktion 5. Auf der Hochwertachse ist die Differenzfrequenz in Hertz aufgetragen. Die Zahlenwerte geben die Solldifferenzgeschwindigkeit zum Netz wieder. Dabei wird der Zahlenbereich von 0 bis 0,25 Hertz gezeigt. Auf der Rechtswertachse ist der Differenzwinkel zwischen Turbine und Netz aufgetragen. Dabei ist am Ende des Abbremsens der Wert zu 0 gesetzt, das entspricht der Zielwinkellage Null, und die Werte davor als negative Werte angegeben. Es ist zu erkennen, dass während des Abbremsens ein nominaler Differenzwinkel von gut 1,6 Umdrehungen zurückgelegt werden wird.

Nun zurück zu Figur 1, aus der ersichtlich wird, dass nach der Beschleunigung auf 50,25 Hertz ein Überschwingen erfolgt. Der dort ablesbare Zahlenwert von 50,31 Hertz ist rein beispielhaft und im Grunde nicht angebracht, da das Überschwingen anlagenspezifisch ist.

Nach dem Überschwingen erfolgt das Abbremsen gemäß der Sollabbremsfunktion 5. Hierzu werden kontinuierlich der Differenzwinkel und die Differenzgeschwindigkeit erfasst. Die gemessene Differenzgeschwindigkeit wird mit der Solldifferenzgeschwindigkeit, die wie in Figur 2 gezeigt aus der Sollabbremsfunktion 5 für den jeweiligen Differenzwinkel abgelesen werden kann, verglichen. Die Verzögerung der Turbine wird sodann entsprechend laufend angepasst, so dass die Differenzgeschwindigkeit möglichst die Solldifferenzgeschwindigkeit erreicht.

Beim Zeitpunkt 85 Sekunden schließlich wird die Netzfrequenz 2 erreicht und die Turbine hat eine zum Stromnetz passende Winkellage, so dass eine phasenrichtige Stromerzeugung und Netzeinspeisung erfolgen kann. Es ist zu betonen, dass die 85 s hierbei beispielhaft sind. Der tatsächliche Wert hängt noch von der betrachteten Turbine und der gewählten Abbrems- oder Beschleunigungsfunktion ab

Abschließend sollen ein Zahlenbeispiel und zugehörige Rechnungen dargestellt werden.

Die Zeit sei t, der Zeitpunkt, bei dem die Turbinenfrequenz und die Netzfrequenz final übereinstimmen, sei $t_0$. Die Netzfrequenz betrage 50 Hertz. Das Abbremsen solle in 20 Sekunden gemäß einer parabelförmigen Sollabbremsfunktion erfolgen. Dann gilt für die Differenz zwischen Netz- und Turbinenfrequenz folgendes:

$$\Delta n(t) = \begin{cases} 0{,}25 & t < t_0 - 20 \\[2mm] \dfrac{0{,}25}{20^2}(t - t_0)^2 & t_0 - 20 \le t < t_0 \\[2mm] 0 & t_0 \le t \end{cases}$$

Der zugehörige nominale Differenzwinkel während des Abbremsens berechnet sich als Summe aus dem Differenzwinkel zum Beginn des Abbremsens und dem sich durch das Abbremsen ergebenden Differenzwinkel. Somit gilt:

$$\Delta\varphi(t) = \Delta\varphi(t_0 - 20) + \int_{t_0 - 20}^{t} \frac{0{,}25}{20^2}(\tau - t_0)^2 \, d\tau = \Delta\varphi(t_0 - 20) - \frac{0{,}25}{3 * 20^2}(-20)^3 + \frac{0{,}25}{3 * 20^2}(t - t_0)^3$$

Aus der Forderung

$$\Delta\varphi(t_0) = 0$$

folgt, dass

$$\Delta\varphi(t_0 - 20) = \frac{0{,}25}{3 * 20^2}(-20)^3 = -\frac{5}{3}$$

Hierbei ist zu beachten, dass der Differenzwinkel hier in Umdrehungszahlen angegeben ist, ein Wert von 1 entspricht mithin 360°.

Der Differenzwinkel lässt sich in Abhängigkeit der Differenz zwischen Netz- und Turbinengeschwindigkeit schreiben:

$$\Delta\varphi(\Delta n) = \frac{0{,}25}{3 * 20^2}\left(\frac{\Delta n * 20^2}{0{,}25}\right)^{3/2}$$

Ebenso ist die Differenz zwischen Netz- und Turbinengeschwindigkeit abhängig vom Differenzwinkel darstellbar.

$$\Delta n_{soll}(\Delta\varphi) = \frac{0{,}25}{20^2}\left(\frac{3*20^2*\Delta\varphi}{0{,}25}\right)^{\frac{2}{3}} = f(\Delta\varphi)$$

Die entsprechende Kurve kann in Figur 2 betrachtet werden.

Die obigen Überlegungen anhand einer parabelförmigen Sollabbremsfunktion sind auf andere Sollabbremsfunktionen übertragbar. Bisweilen mögen die Zusammenhänge nicht oder nur sehr schwer analytisch zu ermitteln sein. Eine numerische Lösung der obigen Gleichung oder eine Vorgabe von f($\Delta\varphi$) durch eine Kennlinie ist jedoch immer möglich.

**Patentansprüche**

1. Verfahren zur Synchronisierung einer Turbine mit einem Wechselstromnetz mit einer Netzfrequenz (2), aufweisend folgende Schritte:

   A) Beschleunigen der Turbine bis zu einer Frequenz (4) im Bereich der Netzfrequenz (2);
   B) Erfassen eines Differenzwinkels zwischen Turbine und Wechselstromnetz;
   C) Erfassen einer Differenzgeschwindigkeit zwischen Turbine und Wechselstromnetz; **gekennzeichnet durch**
   D) Beschleunigen oder Verzögern der Turbine derart, dass die Turbine einer Solltrajektorie (5) folgt, wobei die Solltrajektorie (5) eine vorab errechnete Trajektorie ist, die in Abhängigkeit vom Differenzwinkel die Solldifferenzgeschwindigkeit angibt, die vorhanden sein soll, damit bei übereinstimmender Geschwindigkeit von Turbine und Wechselstromnetz eine für eine synchrone Einspeisung geeignete Zielwinkellage zwischen Turbine und Wechselstromnetz erreicht wird.

2. Verfahren nach Anspruch 1,
   **dadurch gekennzeichnet, dass**
   zum Beschleunigen oder Verzögern der Turbine derart, dass die Turbine der Solltrajektorie (5) folgt, folgende Schritte wiederholt vorgenommen werden:

   E) Ermittlung einer sich aus der Solltrajektorie (5) bei einem erfassten Differenzwinkel ergebenden Solldifferenzgeschwindigkeit;
   F) Vergleich der Solldifferenzgeschwindigkeit mit der bei dem erfassten Differenzwinkel erfassten Differenzgeschwindigkeit;
   G) Beschleunigen oder Verzögern der Turbine derart, dass die Solldifferenzgeschwindigkeit zumindest näherungsweise erreicht wird.

3. Verfahren nach Anspruch 2,
   **dadurch gekennzeichnet, dass**
   die Schritte E) und F) kontinuierlich durchgeführt werden, um die nach Schritt G) erforderliche Beschleunigung oder Verzögerung kontinuierlich anzupassen.

4. Verfahren nach einem der vorhergehenden Ansprüche,
   **dadurch gekennzeichnet, dass**
   die Solltrajektorie (5) parabelförmig ist.

5. Verfahren nach einem der vorhergehenden Ansprüche,
   **dadurch gekennzeichnet, dass**
   die Turbine bis zu einer Frequenz oberhalb der Netzfrequenz (2) beschleunigt wird, insbesondere bis zu einer Frequenz von etwa 0,25 Hz oberhalb der Netzfrequenz (2).

6. Verfahren nach einem der vorhergehenden Ansprüche,
   **dadurch gekennzeichnet, dass**
   berücksichtigt wird, dass bei einem mehrphasigen Netz mehrere Zielwinkellagen vorhanden sein können, wobei bevorzugt diejenige Zielwinkellage ausgewählt wird, die am schnellsten erreicht werden kann.

7. Verfahren nach einem der vorhergehenden Ansprüche,

**dadurch gekennzeichnet, dass**
das Beschleunigen oder Verzögern der Turbine, derart dass die Turbine der Solltrajektorie (5) folgt, bis zum Erreichen der Zielwinkellage etwa 20 s benötigt.

8. Steuereinrichtung für eine Turbine, die eingerichtet ist, eine Turbine nach einem Verfahren gemäß einem der vorhergehenden Ansprüche zu steuern.

**Claims**

1. Method for the synchronization of a turbine with an AC network at network frequency (2), comprising the following steps:

   A) acceleration of the turbine to a frequency (4) in the network frequency (2) range;
   B) identification of an angular differential between the turbine and the AC network;
   C) identification of a speed differential between the turbine and the AC network; **characterized by**
   D) acceleration or deceleration of the turbine such that the turbine follows a setpoint trajectory (5), wherein the setpoint trajectory (5) is a pre-calculated trajectory which, in relation to the angular differential, gives the setpoint speed differential which is required such that, upon the matching of the turbine speed to the AC network, an appropriate target angular position between the turbine and the AC network is achieved for synchronous infeed to proceed.

2. Method according to Claim 1,
   **characterized in that**,
   for the acceleration or deceleration of the turbine such that the turbine follows the setpoint trajectory (5), the following steps are executed repeatedly:

   E) identification of a setpoint speed differential resulting from the setpoint trajectory (5), associated with the detection of an angular differential;
   F) comparison of the setpoint speed differential with the detected speed differential associated with the detected angular differential;
   G) acceleration or deceleration of the turbine such that the setpoint speed differential is at least approximately achieved.

3. Method according to Claim 2,
   **characterized in that**
   steps E) and F) are executed continuously, such that the requisite acceleration or deceleration further to step G) is adjusted continuously.

4. Method according to one of the preceding claims,
   **characterized in that**
   the setpoint trajectory (5) is parabolic.

5. Method according to one of the preceding claims,
   **characterized in that**
   the turbine is accelerated to a frequency above network frequency (2), specifically to a frequency approximately 0.25 Hz above network frequency (2).

6. Method according to one of the preceding claims,
   **characterized in that**
   it is considered that, in a multi-phase network, a plurality of target angular positions may exist, from which that target angular position is preferably selected which will be achieved the most rapidly.

7. Method according to one of the preceding claims,
   **characterized in that**
   the acceleration or deceleration of the turbine, such that the turbine follows the setpoint trajectory (5) until the target angular position is achieved, requires approximately 20 s.

8. Control device for a turbine, which is designed to control a turbine by a method according to one of the preceding claims.

**Revendications**

1. Procédé de synchronisation d'une turbine à un réseau de courant alternatif, ayant une fréquence (2) du réseau, comportant les stades suivants :

   A) accélération de la turbine jusqu'à une fréquence (4) dans le domaine de la fréquence (2) du réseau;
   B) détection d'un angle de différence entre la turbine et le réseau de courant alternatif;
   C) détection d'une vitesse de différence entre la turbine et le réseau de courant alternatif; **caractérisé par**
   D) accélération ou décélération de la turbine, de manière à ce que la turbine suive une trajectoire (5) de consigne, la trajectoire (5) de consigne étant une trajectoire calculée à l'avance, qui indique, en fonction de l'angle de différence, la vitesse de différence de consigne, qui doit être présente afin d'atteindre, à vitesse coïncidente de la turbine et du réseau de courant alternatif, une position angulaire cible entre la turbine et le réseau de courant alternatif appropriée à une alimentation synchrone.

2. Procédé suivant la revendication 1,
   **caractérisé en ce que**
   pour accélérer ou décélérer la turbine, de manière à ce que la turbine suive la trajectoire (5) de consigne, on effectue les stades suivants de manière répétée :

   E) détermination d'une vitesse de différence de consigne provenant de la trajectoire de consigne à un angle de différence détecté;
   F) comparaison de la vitesse de différence de consigne à la vitesse de différence, détectée à l'angle de différence détecté;
   G) accélération ou décélération de la turbine, de manière à atteindre, au moins à peu près, la vitesse de différence de consigne

3. Procédé suivant la revendication 2,
   **caractérisé en ce que**
   l'on effectue les stades E) et F) en continu, afin d'adapter en continu l'accélération ou la décélération nécessaire au stade G).

4. Procédé suivant l'une des revendications précédentes, **caractérisé en ce que** la trajectoire (5) de consigne est en forme de parabole.

5. Procédé suivant l'une des revendications précédentes, **caractérisé en ce que** l'on accélère la turbine jusqu'à une fréquence supérieure à la fréquence (2) du réseau, notamment jusqu'à une fréquence au dessus d'environ 0,25 Hz de la fréquence (2) du réseau.

6. Procédé suivant l'une des revendications précédentes, **caractérisé en ce que** l'on tient compte qu'il peut y avoir, pour un réseau polyphasé, plusieurs positions angulaires cibles, dans lequel on choisit de préférence la position angulaire cible, qui peut être atteinte le plus rapidement.

7. Procédé suivant l'une des revendications précédentes, **caractérisé en ce que** l'accélération ou la décélération de la turbine, de manière à ce que la turbine suive la trajectoire (5) de consigne, nécessite environ 20 s jusqu'à atteindre la position angulaire cible.

8. Dispositif de commande d'une turbine, conçu pour commander une turbine selon un procédé suivant l'une des revendications précédentes.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4280060 A
- EP 2642084 A
- US 20080174122 A
- EP 1764486 A